# EUROPEAN PATENT SPECIFICATION

(11) **EP 3 247 144 B1**
(45) Date of publication and mention of the grant of the patent: **03.03.2021**
(21) Application number: 16200421.2
(22) Date of filing: 24.11.2016
(51) Int. Cl.: H04W 12/12, H04W 48/20

(54) **METHOD AND APPARATUS FOR ACCESSING BASE STATION**
VERFAHREN UND VORRICHTUNG ZUM ZUGRIFF AUF EINE BASISSTATION
PROCÉDÉ ET APPAREIL D'ACCÈS À UNE STATION DE BASE

(30) Priority: 20.05.2016 CN 201610341897
(43) Date of publication of application: 22.11.2017
(73) Proprietor: Beijing Xiaomi Mobile Software Co., Ltd., Beijing 100085 (CN)
(72) Inventor: CUI, Hengbin, Qinghe Middle Street, Haidian District Beijing, 100085 (CN); SUN, Long, Qinghe Middle Street, Haidian District Beijing, 100085 (CN); WANG, Qi, Qinghe Middle Street, Haidian District Beijing, 100085 (CN)
(74) Representative: Hughes, Andrea Michelle

(56) References cited:
- EP-A1- 2 003 818
- EP-A1- 2 661 113
- US-A1- 2007 049 323
- US-A1- 2007 079 376
- US-A1- 2012 096 519

## Description

### TECHNICAL FIELD

The present disclosure generally relates to technical field of computers, and more particularly, to a method and apparatus for accessing a base station.

### BACKGROUND

In practice, a mobile terminal may periodically detect signal intensities of a plurality of base stations which may be accessed at present during an operation, then may determine whether the signal intensity of the currently accessed base station is the maximum among the signal intensities of the plurality of base stations. If yes, the mobile terminal may continue to access the currently accessed base station; otherwise, the mobile terminal may perform an access process again to access the base station having the maximum signal intensity. In this way, the mobile terminal may access the base station having the maximum signal intensity, so as to ensure a normal communication of the mobile terminal.

However, some people may counterfeit a fake base station. When the fake base station operates, within a certain range, the signal intensity of the fake base station may be greater than that of a true base station. Based on the above process, the mobile terminal may access the fake base station, and then the fake base station may send a scam text message to the accessed mobile terminal via a sending number which is generally the same as a telephone number of a bank or a telephone number of an operator, so as to obtain illegal gains.

During an implementation of the present disclosure, at least the following problems are found.

Based on the above process of the mobile terminal, it is possible that the mobile terminal accesses the fake base station, and receives the scam text message sent by the fake base station with a sending number same as the telephone number of a certain bank or a telephone number of a certain operator; in this way, the user is misled, and is easily tricked.

Systems and methods for accessing a base station are known from EP 2003818 and EP 2661113.

### SUMMARY

In order to overcome the problems existing in the related art, the present disclosure provides a method for accessing a base station as defined by claim 1.

If the parameter value of the access parameter satisfies the preset access parameter value condition of safe base station, accessing the first base station; and if the parameter value of the access parameter does not satisfy the access parameter value condition, continuing to access the currently belonged base station includes:
determining a safety factor corresponding to the first base station according to a matching degree between the parameter value of the access parameter and a pre-stored access parameter reference value of a safe base station; if the safety factor is less than a preset threshold value, accessing the first base station; and if the safety factor is not less than the preset threshold value, continuing to access the currently belonged base station.

Determining the safety factor corresponding to the first base station according to the matching degree between the parameter value of the access parameter and the pre-stored access parameter reference value of safe base station includes:
acquiring a pre-stored access parameter reference value of each access parameter of a safe base station;
determining a matching degree between the parameter value of each access parameter carried in the system message and a corresponding access parameter reference value;
determining a safety factor adjusting value corresponding to each access parameter according to a pre-stored corresponding relationship between the matching degree and the safety factor adjusting value, and the matching degree between the parameter value of each access parameter and the corresponding access parameter reference value; and
determining a sum value of a pre-stored safety factor initial value and the safety factor adjusting value corresponding to each access parameter, so as to obtain the safety factor corresponding to the first base station.

The determining the first base station having the maximum signal intensity from the signal intensity of at least one currently detected base station may include:
determining the first base station having the maximum signal intensity from a signal intensity of at least one currently detected base station outside a pre-stored list of forbidden base stations, and
the method further includes:
   when the parameter value of the access parameter does not satisfy the access parameter value condition, adding the first base station into the list of forbidden base stations.

In this way, if the parameter value of the access parameter of the first base station does not satisfy the access parameter value condition, the terminal may shield the system message sent by the first base station, so as to avoid receiving a scam text message sent by the first base station, and prevent the user from being tricked.

[DELETED]

According to a second aspect of the embodiments of the present disclosure, there is provided an apparatus for accessing a base station as defined by claim 3.

The access module is configured to:
determine a safety factor corresponding to the first base station according to a matching degree between the parameter value of the access parameter and a pre-stored access parameter reference value of safe base station; if the safety factor is less than a preset threshold value, access the first base station; and if the safety factor is not less than the preset threshold value, maintain to access the currently belonged base station.

The access module may include:
an acquiring submodule configured to acquire a pre-stored access parameter reference value of each access parameter of a safe base station;
a first determining submodule configured to determine a matching degree between the parameter value of each access parameter carried in the system message and a corresponding access parameter reference value;
a second determining submodule configured to determine a safety factor adjusting value corresponding to each access parameter according to a pre-stored corresponding relationship between the matching degree and the safety factor adjusting value, and the matching degree between the parameter value of each access parameter and the corresponding access parameter reference value; and
a third determining submodule configured to determine a sum value of a pre-stored safety factor initial value and the safety factor adjusting value corresponding to each access parameter, so as to obtain the safety factor corresponding to the first base station.

The determining module may be configured to:
determine the first base station having the maximum signal intensity from a signal intensity of at least one currently detected base station outside a pre-stored list of forbidden base stations, and
the apparatus further includes:
   an adding module configured to, when the parameter value of the access parameter does not satisfy the access parameter value condition, add the first base station into the list of forbidden base stations.

[DELETED]

[DELETED]

The present invention also provides a computer program, which when executied on a processor of a terminal, performs the above method.

The technical solutions provided by the embodiments of the present disclosure may have the following beneficial effects.

In the embodiments of the present disclosure, a first base station having a maximum signal intensity is determined from a signal intensity of at least one currently detected base station, a system message sent by the first base station is received, the system message carrying a parameter value of an access parameter of the first base station, if the parameter value of the access parameter satisfies the preset access parameter value condition of safe base station, the first base station is accessed; and if the parameter value of the access parameter does not satisfy the access parameter value condition of the safe base station, the current base station is continued to be accessed. Based on the above process, if the parameter value of the access parameter does not satisfy the access parameter value condition of the safe base station, the terminal would not access this base station, thereby the terminal is prevented from accessing a fake base station, and from receiving a scam text message sent by the fake base station, and the user is prevented from being tricked.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for accessing a base station, according to an exemplary embodiment.

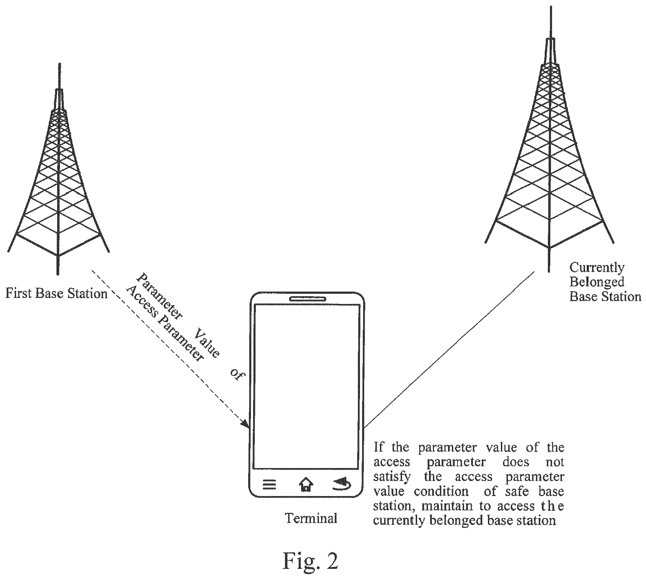

Fig. 2 is an application scenario view, according to an exemplary embodiment.
Fig. 3 is a block diagram illustrating an apparatus for accessing a base station, according to an exemplary embodiment.
Fig. 4 is a block diagram illustrating an apparatus for accessing a base station, according to an exemplary embodiment.
Fig. 5 is a block diagram illustrating an apparatus for accessing a base station, according to an exemplary embodiment.
Fig. 6 is a block diagram illustrating a structure of a terminal, according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Another exemplary embodiment of the present disclosure provides a method for accessing a base station, wherein the method may be applied in a terminal. The terminal may be a mobile terminal, such as a mobile phone or a tablet computer. The terminal may include a transceiver, a processor and a memory. The transceiver may be used for detecting a signal sent by a base station, and receiving a system message sent by the base station, wherein the system message may carry a parameter value of an access parameter of a first base station. The processor may be used for determining a first base station having a maximum signal intensity, and then judging whether the parameter value of the access parameter received by the transceiver satisfies a preset access parameter value condition of a safe base station. If the parameter value of the access parameter satisfies the preset access parameter value condition of a safe base station, the first base station may be accessed; and if not, the base station to which the terminal belongs at present may continue to be accessed. The memory may be used for storing the above access parameter value condition of a safe base station, and data received or generated during the above procedure.

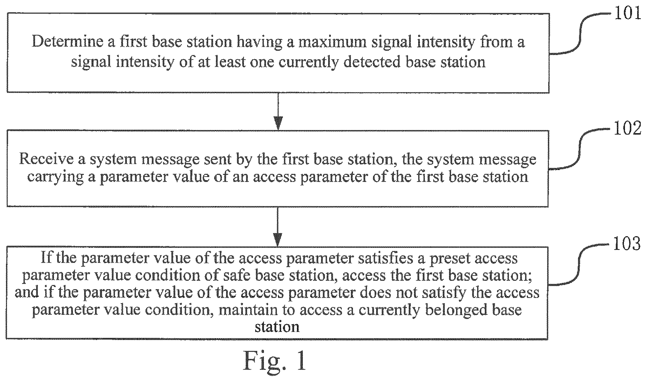

As shown in Fig. 1, a process flow of the method may include the following steps.

In step 101, from a signal intensity of at least one currently detected base station, a first base station having a maximum signal intensity is determined.

During implementation, the terminal may detect signals sent by surrounding base stations during an operation, and may determine signal intensities of the detected signals of respective base stations. The number of the base stations may be one or more. The terminal may detect the signal intensities of the surrounding base stations in real time, or may detect the signal intensities of the surrounding base stations at a preset detection period. The terminal may determine the maximum signal intensity from the detected signal intensities of multiple base stations, and then may determine the base station (i.e., the first base station) corresponding to this signal intensity, so as to facilitate the following process.

Alternatively, the terminal may be provided with a list of forbidden base station. Accordingly, the process procedure of the step 101 may be as follows: from signal intensities of at least one currently detected base station outside the pre-stored list of forbidden base stations, determining a first base station having the maximum signal intensity.

During implementation, the terminal may store the list of forbidden base stations in advance, and the list of forbidden base stations may store an identification of an unsafe base station. After detecting signals sent by surrounding base stations, the terminal may compare the base stations sending the signals with base stations stored in the list of forbidden base stations, so as to determine whether a base station of the base stations sending the signals exists in the list of forbidden base stations. If such base station exists, the base station(s) outside the list of forbidden base stations may be determined among the currently detected base stations, and then the first base station having the maximum signal intensity is determined from the determined base stations; and if such base station does not exist, the first base station having the maximum signal intensity may be determined among the signal intensities of all the currently detected base stations.

In step 102, a system message sent by the first base station is received, the system message carrying a parameter value of an access parameter of the first base station.

During implementation, frequency bands of signals sent by different base stations are different. After determining the first base station having the maximum signal intensity, the terminal may adjust a receiving frequency band of a local transceiver as the frequency band of the first base station. In this way, the terminal may receive the system message sent by the first base station. The system message may carry various parameters, such as a System Information Type1 (SIB1), a System Information Type2 (SIB2), and a System Information Type3 (SIB3). In the present embodiment, parameters contained in the SIB3, such as a minimum access level, reselected offset information, an update period, a General Packet Radio Service (GPRS) supporting status, and a Location Area Code (LAC) identification, are mainly concerned. The terminal may receive the system message sent by the first base station, and the system message may carry a parameter value of an access parameter of the first base station. The access parameter includes at least one or more of the minimum access level, the reselected offset information, the update period, the GPRS supporting status, and the LAC identification. The access parameter may also include other parameters in the system message, which is not limited by the present embodiment. After receiving the system message sent by the first base station, the terminal may parse the system message and then obtain the access parameter in the system message for facilitating the following process.

In step 103, if the parameter value of the access parameter satisfies a preset access parameter value condition of safe base station, the first base station is accessed; and if the parameter value of the access parameter does not satisfy the access parameter value condition, a currently belonged base station is maintained to be accessed.

During implementation, after obtaining the parameter value of the access parameter in the system message, the terminal may determine whether the parameter value of the access parameter satisfies the preset access parameter value condition of a safe base station, if the terminal determines that the parameter value of the access parameter satisfies the preset access parameter value condition of a safe base station, the terminal may access the first base station; and if the terminal determines that the parameter value of the access parameter does not satisfy the access parameter value condition, the terminal continues to access the current base station. For example, the terminal may store a range of access parameter value of safe base station in advance, determine whether the received parameter value of the access parameter is within the range of access parameter values, if yes, the terminal may determine that the parameter value of the access parameter satisfies the preset access parameter value condition of a safe base station; otherwise, the terminal may determine that the parameter value of the access parameter does not satisfy the preset access parameter value condition of a safe base station. In the case that there are multiple access parameters, ranges of access parameter values corresponding to respective access parameters may be stored, and whether respective received parameter values of the access parameters are within the corresponding ranges of access parameter values are determined respectively. For example, the range of access parameter values corresponding to the minimum access level is 50db∼120db, then if the received minimum access level is not within this range, it may be determined that the received minimum access level does not satisfy the access parameter value condition.

Alternatively, it is possible to determine whether to access the first base station according to a safety factor corresponding to the first base station. Accordingly, the process procedure of the step 103 may be as follows: determining a safety factor corresponding to the first base station according to a matching degree between the parameter value of the access parameter and the pre-stored access parameter reference value of a safe base station; if the safety factor is less than a preset threshold value, accessing the first base station; and if the safety factor is not less than the preset threshold value, maintaining to access the currently belonged base station.

During implementation, the terminal may determine a matching degree between the parameter value of the access parameter and the pre-stored access parameter reference value of a safe base station, and then determine the safety factor corresponding to the first base station based on the matching degree. For example, in the case that there are multiple access parameters, the terminal may respectively determine the matching degree between each access parameter and the corresponding access parameter reference value, and then may determine a number of the access parameters whose corresponding matching degrees do not satisfy the preset matching condition. The terminal may store a corresponding relationship between the number of the access parameters not satisfying the preset matching condition and the safety factor in advance, and then may look up the corresponding safety factor based on the determined number, wherein a relatively high number may correspond to a relatively high safety factor. After determining the safety factor corresponding to the first base station, the terminal may compare the safety factor with the preset threshold value which is stored in advance. If the safety factor is less than the preset threshold value, the terminal may access the first base station; and if the safety factor is not less than the preset threshold value, the currently belonged base station may be maintained to be accessed.

Alternatively, the safety factor of the first base station may be determined according to the matching degree and a safety factor initial value. The corresponding process procedure may be as follows: acquiring pre-stored access parameter reference values of respective access parameters of a safe base station; respectively determining a matching degree between the parameter value of each access parameter carried in the system message and the corresponding access parameter reference value; respectively determining a safety factor adjusting value corresponding to each access parameter according to the pre-stored corresponding relationship between the matching degree and the safety factor adjusting value, and the matching degree between the parameter value of each access parameter and the corresponding access parameter reference value; and determining a sum value of the pre-stored safety factor initial value and the safety factor adjusting value corresponding to each access parameter, so as to obtain the safety factor corresponding to the first base station.

During implementation, in the case that there are multiple access parameters, the terminal may store access parameter reference values of respective access parameters of a safe base station in advance. The terminal may respectively determine the matching degree between the parameter value of each access parameter and the corresponding access parameter reference value, and then may respectively determine the safety factor adjusting value corresponding to each access parameter based on the pre-stored corresponding relationship between the matching degree and the safety factor adjusting value, and the determined matching degree.

There are various manners for determining the matching degree between the parameter value of the access parameter and the access parameter reference value by the terminal. The present embodiment provides several feasible determining procedures. The following several procedures may be used separately, or may be used in combination according to the access parameter.

In a first manner, the terminal may determine whether the received parameter value is the same as the access parameter reference value, if they are the same, it may be determined that the matching degree between the parameter value of the access parameter and the pre-stored access parameter reference value of a safe base station is a first matching degree (i.e., they are matched); otherwise, it may be determined that the matching degree is a second matching degree (i.e., they are not matched). For example, for the GPRS supporting status, the access parameter reference value may be supporting, then the terminal may determine whether the parameter value of the received GPRS supporting status is also supporting. For another example, as to the LAC identification, the access parameter reference value may be a LAC identification sent by the currently accessed base station, then the terminal may determine whether the received LAC identification is the same as the pre-stored LAC identification.

In a second manner, the terminal may also, based on a difference value between the received parameter value and the access parameter reference value, determine the matching degree therebetween. For example, as to the update period, the access parameter reference value may be 1h, if the received update period is less than the access parameter reference value, and the difference value is greater than a preset first difference threshold value, such as 30min, then it is determined that the matching degree between the received update period and the corresponding access parameter reference value is the second matching degree (i.e., they are not matched). For another example, as to the reselected offset information, the access parameter reference value may be 55m, if the received reselected offset information is greater than the access parameter reference value, i.e., the difference value therebetween is positive, it is determined that the matching degree between the received reselected offset information and the access parameter reference value corresponding to the reselected offset information is the second matching degree (i.e., they are not matched).

In addition, for a certain access parameter, a plurality of difference threshold values may be set. The terminal may determine a mismatching degree according to the determined difference value and the plurality of difference threshold values. The greater the mismatching degree is, the greater the corresponding safety factor adjusting value is; and the smaller the mismatching degree is, the smaller the corresponding safety factor adjusting value is. For example, the reference value corresponding to the minimum access level is 50db, the difference threshold value is 0 and 20db, if the received minimum access level is less than 50db, and an absolute value of the difference value with 50db is less than 20db, then it may be determined that the matching degree therebetween is a third matching degree (i.e., the mismatching degree is relatively low), and the corresponding safety adjusting value is determined to be 3 according to the above corresponding relationship; and if the received minimum access level is less than 50db, and an absolute value of the difference value with 50db is greater than 20db, then it may be determined that the matching degree therebetween is a fourth matching degree (i.e., the mismatching degree is relatively high), and the corresponding safety adjusting value is determined to be 5 according to the above corresponding relationship.

In a third manner, the terminal may also determine whether the received access parameter is consistent with the pre-stored access parameter of a safe base station. For example, as to the access parameter "inter-system reselected configuration information instruction", the access parameter of a safe base station generally includes this parameter, and if the received access parameter does not contain the inter-system reselected configuration information instruction, then it may be determined that they are not matched.

After determining the safety factor adjusting value corresponding to each access parameter, the terminal may add the pre-stored safety factor initial value to the safety factor adjusting value corresponding to each access parameter, so as to obtain the safety factor corresponding to the first base station.

For example, the reference value corresponding to the GPRS supporting status is supporting, if the received GPRS supporting status is supporting, then it may be determined that the corresponding weighting factor adjusting value is 0; and if the received GPRS supporting status is not supporting, then it may be determined that the corresponding weighting factor adjusting value is 5. The reference value corresponding to the update period is 1h, if the received update period is smaller than the access parameter reference value and the difference value is greater than 30min, then it may be determined that the corresponding weighting factor adjusting value is 5. For the inter-system reselected configuration information instruction, if the received system message does not contain the inter-system reselected configuration information instruction, then it may be determined that the corresponding weighting factor adjusting value is 5. The safety factor initial value may be set to 5, the received minimum access level may be set to 10db, the GPRS supporting status may be set to not supporting, and the update period may be set to 10min, then it may be determined that a first safety factor adjusting value is 5+5+5+5=20, and the safety factor corresponding to the first base station is 5+20=25.

After determining the safety factor corresponding to the first base station, the terminal may compare the safety factor with the pre-stored preset threshold value, if the safety factor is smaller than the preset threshold value, the terminal may access the first base station; and if the safety factor is not smaller than the preset threshold value, the terminal may maintain to access the currently belonged base station.

Optionally, if the terminal determines that the parameter value of the access parameter does not satisfy the access parameter value condition, the terminal may add the first base station into the list of forbidden base stations, so as to prevent the terminal from receiving the message sent by the first base station again.

During implementation, the terminal may store the list of forbidden base stations in advance, and the list of forbidden base stations may store an identification of an unsafe base station. For the base station contained in the list of forbidden base station, the terminal may not receive the message sent by such a base station. If the terminal determines that the parameter value of the access parameter of the first base station does not satisfy the access parameter value condition, it indicates that the first base station may be an unsafe base station, then the terminal may add the first base station into the list of forbidden base stations. In this way, the terminal would neither receive the system message sent by the first base station later, nor access the first base station, thereby the user security may be improved.

In the embodiments of the present disclosure, a first base station having a maximum signal intensity is determined among a signal intensity of at least one currently detected base station, a system message sent by the first base station is received, the system message carrying a parameter value of an access parameter of the first base station, if the parameter value of the access parameter satisfies the preset access parameter value condition of safe base station, the first base station is accessed; and if the parameter value of the access parameter does not satisfy the access parameter value condition of the safe base station, the currently belonged base station is maintained to be accessed. Based on the above process, if the parameter value of the access parameter does not satisfy the access parameter value condition of the safe base station, the terminal would not access this base station, thereby the terminal is prevented from accessing a fake base station, and from receiving a scam text message sent by the fake base station, and the user is prevented from being tricked.

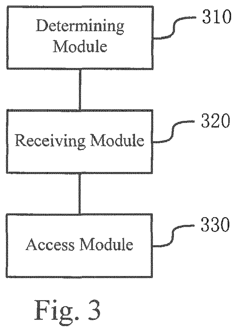

Further another exemplary embodiment of the present disclosure also provides an apparatus for accessing a base station. As shown in Fig. 3, the apparatus includes: a determining module 310, a receiving module 320, and an accessing module 330.

The determining module 310 is configured to determine a first base station having a maximum signal intensity from a signal intensity of at least one currently detected base station.

The receiving module 320 is configured to receive a system message sent by the first base station, the system message carrying a parameter value of an access parameter of the first base station.

The accessing module 330 is configured to, if the parameter value of the access parameter satisfies a preset access parameter value condition of a safe base station, access the first base station; and if the parameter value of the access parameter does not satisfy the access parameter value condition, continue to access a current base station.

Optionally, the access module 330 is configured to:
determine a safety factor corresponding to the first base station according to a matching degree between the parameter value of the access parameter and a pre-stored access parameter reference value of a safe base station; if the safety factor is less than a preset threshold value, access the first base station; and if the safety factor is not less than the preset threshold value, continue to access the current base station.

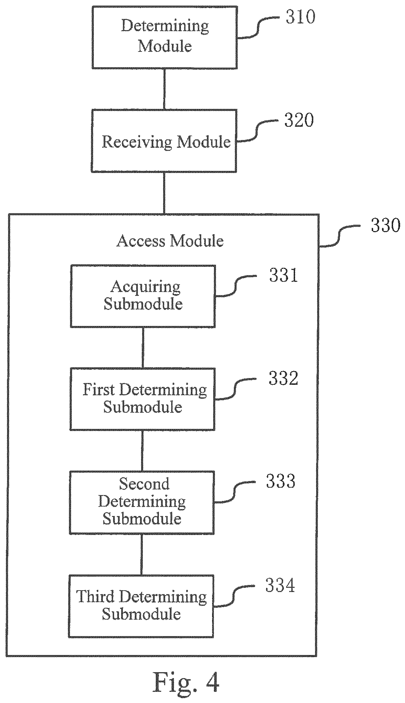

Optionally, as shown in Fig. 4, the access module 330 includes: an acquiring submodule 331, a first determining submodule 332, a second determining submodule 333, and a third determining submodule 334

The acquiring submodule 331 is configured to acquire pre-stored access parameter reference values of respective access parameters of a safe base station.

The first determining submodule 332 is configured to determine a matching degree between the parameter value of each access parameter carried in the system message and a corresponding access parameter reference value.

The second determining submodule 333 is configured to determine a safety factor adjusting value corresponding to each access parameter according to a pre-stored corresponding relationship between the matching degree and the safety factor adjusting value, and the matching degree between the parameter value of each access parameter and the corresponding access parameter reference value.

The third determining submodule 334 is configured to determine a sum value of a pre-stored safety factor initial value and the safety factor adjusting value corresponding to each access parameter, so as to obtain the safety factor corresponding to the first base station.

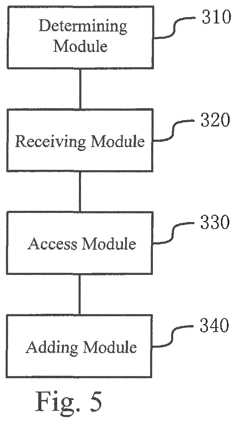

Optionally, as shown in Fig. 5, the determining module is configured to: determine the first base station having the maximum signal intensity from a signal intensity of at least one currently detected base station outside a pre-stored list of forbidden base stations, and
the apparatus further includes:
an adding module 340 configured to, when the parameter value of the access parameter does not satisfy the access parameter value condition, add the first base station into the list of forbidden base stations.

Optionally, the access parameter includes at least one or more of a minimum access level, reselected offset information, an update period, a General Packet Radio Service (GPRS) supporting status, and a Location Area Code (LAC) identification.

With respect to the apparatus in the above embodiments, the specific manners for performing operations for individual modules therein have been described in detail in the embodiments regarding the methods, which will not be elaborated herein.

In the embodiments of the present disclosure, a first base station having a maximum signal intensity is determined from a signal intensity of at least one currently detected base station, a system message sent by the first base station is received, the system message carrying a parameter value of an access parameter of the first base station, if the parameter value of the access parameter satisfies the preset access parameter value condition of a safe base station, the first base station is accessed; and if the parameter value of the access parameter does not satisfy the access parameter value condition of the safe base station, the current base station is continues to be accessed. Based on the above process, if the parameter value of the access parameter does not satisfy the access parameter value condition of the safe base station, the terminal would not access this base station, thereby the terminal is prevented from accessing a fake base station, and from receiving a scam text message sent by the fake base station, and the user is prevented from being tricked.

It should be explained, when the apparatus for accessing a base station provided by the above embodiments accesses a base station, the above divided functional modules are just taken as an example. In practical applications, the functions can be assigned to different functional modules according to requirements, namely, inner structures of the device may be divided into different functional modules to accomplish the whole or a part of the functions described above. In addition, the apparatus for accessing a base station, and the method for accessing a base station provided by the above embodiments belong to the same concept, and the detailed implementing procedure is shown in the embodiments of method, which is not elaborated herein.

Another exemplary embodiment of the present disclosure provides a structural view of a terminal. The terminal may be a mobile phone, a tablet computer, or the like.

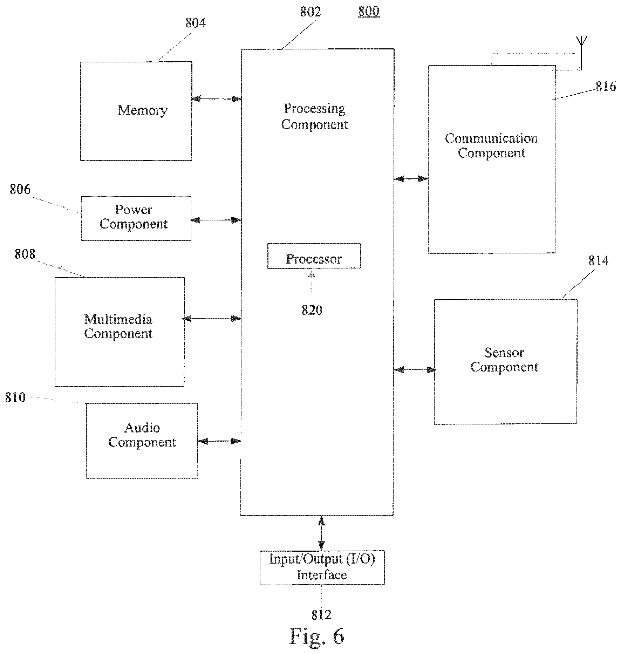

Referring to Fig. 6, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by a processor of the terminal, enables the terminal to perform the above method, the method including:
determining a first base station having a maximum signal intensity from a signal intensity of at least one currently detected base station;
receiving a system message sent by the first base station, the system message carrying a parameter value of an access parameter of the first base station; and
if the parameter value of the access parameter satisfies a preset access parameter value condition of safe a base station, accessing the first base station; and if the parameter value of the access parameter does not satisfy the access parameter value condition, maintaining to access a currently belonged base station.

Alternatively, if the parameter value of the access parameter satisfies the preset access parameter value condition of safe base station, accessing the first base station; and if the parameter value of the access parameter does not satisfy the access parameter value condition, maintaining to access the currently belonged base station includes:
determining a safety factor corresponding to the first base station according to a matching degree between the parameter value of the access parameter and a pre-stored access parameter reference value of safe base station; if the safety factor is less than a preset threshold value, accessing the first base station; and if the safety factor is not less than the preset threshold value, maintaining to access the currently belonged base station.

Optionally, the determining the safety factor corresponding to the first base station according to the matching degree between the parameter value of the access parameter and the pre-stored access parameter reference value of safe base station includes:
acquiring pre-stored access parameter reference values of respective access parameters of a safe base station;
determining a matching degree between the parameter value of each access parameter carried in the system message and a corresponding access parameter reference value;
determining a safety factor adjusting value corresponding to each access parameter according to a pre-stored corresponding relationship between the matching degree and the safety factor adjusting value, and the matching degree between the parameter value of each access parameter and the corresponding access parameter reference value; and
determining a sum value of a pre-stored safety factor initial value and the safety factor adjusting value corresponding to each access parameter, so as to obtain the safety factor corresponding to the first base station.

Optionally, the determining the first base station having the maximum signal intensity from the signal intensity of at least one currently detected base station includes:
determining the first base station having the maximum signal intensity from a signal intensity of at least one currently detected base station outside a pre-stored list of forbidden base stations, and
the method further includes:
   when the parameter value of the access parameter does not satisfy the access parameter value condition, adding the first base station into the list of forbidden base stations.

The access parameter may include at least one or more of a minimum access level, reselected offset information, an update period, a General Packet Radio Service (GPRS) supporting status, and a Location Area Code (LAC) identification.

In the embodiments of the present disclosure, a first base station having a maximum signal intensity is determined from a signal intensity of at least one currently detected base station, a system message sent by the first base station is received, the system message carrying a parameter value of an access parameter of the first base station, if the parameter value of the access parameter satisfies the preset access parameter value condition of safe base station, the first base station is accessed; and if the parameter value of the access parameter does not satisfy the access parameter value condition of the safe base station, the current base station continues to be accessed. Based on the above process, if the parameter value of the access parameter does not satisfy the access parameter value condition of the safe base station, the terminal would not access this base station, thereby the terminal is prevented from accessing a fake base station, and from receiving a scam text message sent by the fake base station, and the user is prevented from being tricked.

## Claims

1. A method for accessing a base station, comprising:
determining (101) a first base station having a maximum signal intensity from a signal intensity of at least one currently detected base station;
receiving (102) a system message sent by the first base station, the system message carrying a parameter value of an access parameter of the first base station; and
if the parameter value of the access parameter satisfies a preset access parameter value condition of safe base station, accessing the first base station; and if the parameter value of the access parameter does not satisfy the access parameter value condition, continuing to access a current base station (103); and wherein
if the parameter value of the access parameter satisfies the preset access parameter value condition of safe base station, accessing the first base station; and if the parameter value of the access parameter does not satisfy the access parameter value condition, continuing to access the current base station (103) comprises:
determining a safety factor corresponding to the first base station according to a matching degree between the parameter value of the access parameter and a pre-stored access parameter reference value of safe base station; if the safety factor is less than a preset threshold value, accessing the first base station; and if the safety factor is not less than the preset threshold value, continuing to access the current base station; and
wherein the determining the safety factor corresponding to the first base station according to the matching degree between the parameter value of the access parameter and the pre-stored access parameter reference value of a safe base station comprises:
acquiring a pre-stored access parameter reference value of each of a plurality of access parameters of a safe base station;
determining a matching degree between the parameter value of each access parameter carried in the system message and a corresponding access parameter reference value;
determining a safety factor adjusting value corresponding to each access parameter according to a pre-stored corresponding relationship between the matching degree and the safety factor adjusting value, and the matching degree between the parameter value of each access parameter and the corresponding access parameter reference value; and
determining a sum value of a pre-stored safety factor initial value and the safety factor adjusting value corresponding to each access parameter, so as to obtain the safety factor corresponding to the first base station;
wherein the plurality of access parameters comprises a minimum access level, reselection offset information, an update period, a General Packet Radio Service (GPRS) supporting status, and a Location Area Code (LAC) identification.

2. The method of claim 1, wherein the determining (101) the first base station having the maximum signal intensity from the signal intensity of at least one currently detected base station comprises:
determining the first base station having the maximum signal intensity from a signal intensity of at least one currently detected base station outside a pre-stored list of forbidden base stations, and
the method further comprises:
when the parameter value of the access parameter does not satisfy the access parameter value condition, adding the first base station into the list of forbidden base stations.

3. An apparatus for accessing a base station, comprising:
a determining module (310) configured to determine a first base station having a maximum signal intensity from a signal intensity of at least one currently detected base station;
a receiving module (320) configured to receive a system message sent by the first base station, the system message carrying a parameter value of an access parameter of the first base station; and
an access module (330) configured to, if the parameter value of the access parameter satisfies a preset access parameter value condition of a safe base station, access the first base station; and if the parameter value of the access parameter does not satisfy the access parameter value condition, continue to access a current base station; and wherein
the access module (330) is configured to:
determine a safety factor corresponding to the first base station according to a matching degree between the parameter value of the access parameter and a pre-stored access parameter reference value of a safe base station; if the safety factor is less than a preset threshold value, access the first base station; and if the safety factor is not less than the preset threshold value, continue to access the current base station;
wherein the access module (330) further comprises:
an acquiring submodule (331) configured to acquire a pre-stored access parameter reference value of each of a plurality of access parameters of safe base station;
a first determining submodule (332) configured to determine a matching degree between the parameter value of each access parameter carried in the system message and a corresponding access parameter reference value;
a second determining submodule (333) configured to determine a safety factor adjusting value corresponding to each access parameter according to a pre-stored corresponding relationship between the matching degree and the safety factor adjusting value, and the matching degree between the parameter value of each access parameter and the corresponding access parameter reference value; and
a third determining submodule (334) configured to determine a sum value of a pre-stored safety factor initial value and the safety factor adjusting value corresponding to each access parameter, so as to obtain the safety factor corresponding to the first base station;
wherein the plurality of access parameters comprises a minimum access level, reselection offset information, an update period, a General Packet Radio Service (GPRS) supporting status, and a Location Area Code (LAC) identification.

4. The apparatus of claim 3, wherein the determining module (310) is configured to:
determine the first base station having the maximum signal intensity from a signal intensity of at least one currently detected base station outside a pre-stored list of forbidden base stations, and
the apparatus further comprises:
an adding module (340) configured to, when the parameter value of the access parameter does not satisfy the access parameter value condition, add the first base station into the list of forbidden base stations.

5. A computer program, which when executing on a processor of terminal, performs a method according to any one of claims 1 and 2.

## Patentansprüche

1. Verfahren zum Zugreifen auf eine Basisstation, umfassend:
Ermitteln (101) einer ersten Basisstation mit einer maximalen Signalintensität aus einer Signalintensität mindestens einer derzeit erfassten Basisstation;
Empfangen (102) einer Systemnachricht, die von der ersten Basisstation gesendet wird, wobei die Systemnachricht einen Parameterwert eines Zugriffsparameters der ersten Basisstation trägt; und
wenn der Parameterwert des Zugriffsparameters eine voreingestellte Zugriffsparameterwertbedingung einer sicheren Basisstation erfüllt, Zugreifen auf die erste Basisstation; und wenn der Parameterwert des Zugriffsparameters die Zugriffsparameterwertbedingung nicht erfüllt, Fortfahren mit Zugreifen auf eine aktuelle Basisstation (103); und wobei
wenn der Parameterwert des Zugriffsparameters die voreingestellte Zugriffsparameterwertbedingung einer sicheren Basisstation erfüllt, Zugreifen auf die erste Basisstation; und wenn der Parameterwert des Zugriffsparameters die Zugriffsparameterwertbedingung nicht erfüllt, Fortfahren mit Zugreifen auf die aktuelle Basisstation (103) umfasst:
Ermitteln eines Sicherheitsfaktors entsprechend der ersten Basisstation gemäß einem Übereinstimmungsgrad zwischen dem Parameterwert des Zugriffsparameters und einem vorab gespeicherten Zugriffsparameterreferenzwert einer sicheren Basisstation; wenn der Sicherheitsfaktor kleiner als ein voreingestellter Schwellenwert ist, Zugreifen auf die erste Basisstation; und wenn der Sicherheitsfaktor nicht kleiner als der voreingestellte Schwellenwert ist, Fortfahren mit Zugreifen auf die aktuelle Basisstation; und
wobei das Ermitteln des Sicherheitsfaktors entsprechend der ersten Basisstation gemäß dem Übereinstimmungsgrad zwischen dem Parameterwert des Zugriffsparameters und dem vorab gespeicherten Zugriffsparameterreferenzwert einer sicheren Basisstation umfasst:
Erlangen eines vorab gespeicherten Zugriffsparameterreferenzwerts jedes einer Vielzahl von Zugriffsparametern einer sicheren Basisstation;
Ermitteln eines Übereinstimmungsgrads zwischen dem Parameterwert jedes Zugriffsparameters, der in der Systemnachricht getragen wird, und einem entsprechenden Zugriffsparameterreferenzwert;
Ermitteln eines Sicherheitsfaktoreinstellwerts entsprechend jedem Zugriffsparameter gemäß einem vorab gespeicherten entsprechenden Verhältnis zwischen dem Übereinstimmungsgrad und dem Sicherheitsfaktoreinstellwert und dem Übereinstimmungsgrad zwischen dem Parameterwert jedes Zugriffsparameters und dem entsprechenden Zugriffsparameterreferenzwert; und
Ermitteln eines Summenwertes eines vorab gespeicherten Sicherheitsfaktoranfangswerts und dem Sicherheitsfaktoreinstellwert entsprechend jedem Zugriffsparameter, um so den Sicherheitsfaktor entsprechend der ersten Basisstation zu erhalten;
wobei die Vielzahl von Zugriffsparametern eine minimale Zugriffsebene, Neuauswahlversatzinformationen, eine Aktualisierungsperiode, einen General Packet Radio Service (GPRS, allgemeiner paketorientierter Funkdienst) Unterstützungsstatus und eine Location Area Code (LAC, Aufenthaltsbereichskennzahl) Kennung umfasst.

2. Verfahren nach Anspruch 1, wobei das Ermitteln (101) der ersten Basisstation mit einer maximalen Signalintensität aus der Signalintensität mindestens einer derzeit erfassten Basisstation umfasst:
Ermitteln der ersten Basisstation mit der maximalen Signalintensität aus einer Signalintensität mindestens einer derzeit erfassten Basisstation außerhalb einer vorab gespeicherten Liste verbotener Basisstationen und
das Verfahren weiter umfasst:
wenn der Parameterwert des Zugriffsparameters die Zugriffsparameterwertbedingung nicht erfüllt, Hinzufügen der ersten Basisstation in die Liste verbotener Basisstationen.

3. Vorrichtung zum Zugreifen auf eine Basisstation, umfassend:
ein Ermittlungsmodul (310), das konfiguriert ist, eine erste Basisstation mit einer maximalen Signalintensität aus einer Signalintensität mindestens einer derzeit erfassten Basisstation zu ermitteln;
ein Empfangsmodul (320), das konfiguriert ist, eine Systemnachricht zu empfangen, die von der ersten Basisstation gesendet wird, wobei die Systemnachricht einen Parameterwert eines Zugriffsparameters der ersten Basisstation trägt; und
ein Zugriffsmodul (330), das konfiguriert ist, wenn der Parameterwert des Zugriffsparameters eine voreingestellte Zugriffsparameterwertbedingung einer sicheren Basisstation erfüllt, auf die erste Basisstation zuzugreifen; und wenn der Parameterwert des Zugriffsparameters die Zugriffsparameterwertbedingung nicht erfüllt, mit Zugreifen auf eine aktuelle Basisstation fortzufahren; und wobei
das Zugriffsmodul (330) konfiguriert ist zum:
Ermitteln eines Sicherheitsfaktors entsprechend der ersten Basisstation gemäß einem Übereinstimmungsgrad zwischen dem Parameterwert des Zugriffsparameters und einem vorab gespeicherten Zugriffsparameterreferenzwert einer sicheren Basisstation; wenn der Sicherheitsfaktor kleiner als ein voreingestellter Schwellenwert ist, Zugreifen auf die erste Basisstation; und wenn der Sicherheitsfaktor nicht kleiner als der voreingestellte Schwellenwert ist, Fortfahren mit Zugreifen auf die aktuelle Basisstation;
wobei das Zugriffsmodul (330) weiter umfasst:
ein Erlangungsteilmodul (331), das konfiguriert ist, einen vorab gespeicherten Zugriffsparameterreferenzwert jedes einer Vielzahl von Zugriffsparametern einer sicheren Basisstation zu erlangen;
ein erstes Ermittlungsteilmodul (332), das konfiguriert ist, einen Übereinstimmungsgrad zwischen dem Parameterwert jedes Zugriffsparameters, der in der Systemnachricht getragen wird, und einem entsprechenden Zugriffsparameterreferenzwert zu ermitteln;
ein zweites Ermittlungsteilmodul (333), das konfiguriert ist, einen Sicherheitsfaktoreinstellwert entsprechend jedem Zugriffsparameter gemäß einem vorab gespeicherten entsprechenden Verhältnis zwischen dem Übereinstimmungsgrad und dem Sicherheitsfaktoreinstellwert und dem Übereinstimmungsgrad zwischen dem Parameterwert jedes Zugriffsparameters und dem entsprechenden Zugriffsparameterreferenzwert zu ermitteln; und
ein drittes Ermittlungsteilmodul (334), das konfiguriert ist, einen Summenwert eines vorab gespeicherten Sicherheitsfaktoranfangswerts und dem Sicherheitsfaktoreinstellwert entsprechend jedem Zugriffsparameter zu ermitteln, um so den Sicherheitsfaktor entsprechend der ersten Basisstation zu erhalten;
wobei die Vielzahl von Zugriffsparametern eine minimale Zugriffsebene, Neuauswahlversatzinformationen, eine Aktualisierungsperiode, einen General Packet Radio Service (GPRS, allgemeiner paketorientierter Funkdienst) Unterstützungsstatus und eine Location Area Code (LAC, Aufenthaltsbereichskennzahl) Kennung umfasst.

4. Vorrichtung nach Anspruch 3, wobei das Ermittlungsmodul (310) konfiguriert ist zum:
Ermitteln der ersten Basisstation mit der maximalen Signalintensität aus einer Signalintensität mindestens einer derzeit erfassten Basisstation außerhalb einer vorab gespeicherten Liste verbotener Basisstationen und
die Vorrichtung weiter umfasst:
ein Hinzufügungsmodul (340), das konfiguriert ist, wenn der Parameterwert des Zugriffsparameters die Zugriffsparameterwertbedingung nicht erfüllt, die erste Basisstation in die Liste verbotener Basisstationen hinzuzufügen.

5. Computerprogramm, das, wenn auf einem Prozessor eines Endgeräts ausgeführt, ein Verfahren nach einem der Ansprüche 1 und 2 durchführt.

## Revendications

1. Procédé pour accéder à une station de base, comprenant les étapes consistant à :
déterminer (101) une première station de base ayant une intensité de signal maximum à partir d'une intensité de signal d'au moins une station de base actuellement détectée ;
recevoir (102) un message système envoyé par la première station de base, le message système portant une valeur de paramètre d'un paramètre d'accès de la première station de base ; et
si la valeur de paramètre du paramètre d'accès satisfait une condition de valeur de paramètre d'accès prédéfinie de station de base sûre, accéder à la première station de base ; et si la valeur de paramètre du paramètre d'accès ne satisfait pas la condition de valeur de paramètre d'accès, continuer d'accéder à une station de base actuelle (103) ; et dans lequel
si la valeur de paramètre du paramètre d'accès satisfait la condition de valeur de paramètre d'accès prédéfinie de station de base sûre, accéder à la première station de base ; et si la valeur de paramètre du paramètre d'accès ne satisfait pas la condition de valeur de paramètre d'accès, continuer d'accéder à la station de base actuelle (103) comprend les étapes consistant à :
déterminer un facteur de sécurité correspondant à la première station de base selon un degré de correspondance entre la valeur de paramètre du paramètre d'accès et une valeur de référence de paramètre d'accès pré-stockée de station de base sûre ; si le facteur de sécurité est inférieur à une valeur de seuil prédéfinie, accéder à la première station de base ; et si le facteur de sécurité n'est pas inférieur à la valeur de seuil prédéfinie, continuer d'accéder à la station de base actuelle ; et
dans lequel la détermination du facteur de sécurité correspondant à la première station de base selon le degré de correspondance entre la valeur de paramètre du paramètre d'accès et la valeur de référence de paramètre d'accès pré-stockée d'une station de base sûre comprend les étapes consistant à :
acquérir une valeur de référence de paramètre d'accès pré-stockée de chacun d'une pluralité de paramètres d'accès d'une station de base sûre ;
déterminer un degré de correspondance entre la valeur de paramètre de chaque paramètre d'accès porté dans le message système et une valeur de référence de paramètre d'accès correspondante ;
déterminer une valeur d'ajustement de facteur de sécurité correspondant à chaque paramètre d'accès selon une relation correspondante pré-stockée entre le degré de correspondance et la valeur d'ajustement de facteur de sécurité, et le degré de correspondance entre la valeur de paramètre de chaque paramètre d'accès et la valeur de référence de paramètre d'accès correspondante ; et
déterminer une valeur de somme d'une valeur initiale de facteur de sécurité pré-stockée et de la valeur d'ajustement de facteur de sécurité correspondant à chaque paramètre d'accès, de manière à obtenir le facteur de sécurité correspondant à la première station de base ;
dans lequel la pluralité de paramètres d'accès comprend un niveau d'accès minimum, des informations de décalage de resélection, une période de mise à jour, un état de prise en charge de service général de radiocommunication par paquets (GPRS), et une identification de code de zone de localisation (LAC).

2. Procédé selon la revendication 1, dans lequel la détermination (101) de la première station de base ayant l'intensité de signal maximum à partir de l'intensité de signal d'au moins une station de base actuellement détectée comprend l'étape consistant à :
déterminer la première station de base ayant l'intensité de signal maximum à partir d'une intensité de signal d'au moins une station de base actuellement détectée en dehors d'une liste pré-stockée de stations de base interdites, et
le procédé comprend en outre en outre l'étape consistant à :
lorsque la valeur de paramètre du paramètre d'accès ne satisfait pas la condition de valeur de paramètre d'accès, ajouter la première station de base dans la liste des stations de base interdites.

3. Appareil pour accéder à une station de base, comprenant :
un module de détermination (310) configuré pour déterminer une première station de base ayant une intensité de signal maximum à partir d'une intensité de signal d'au moins une station de base actuellement détectée ;
un module de réception (320) configuré pour recevoir un message système envoyé par la première station de base, le message système portant une valeur de paramètre d'un paramètre d'accès de la première station de base ; et
un module d'accès (330) configuré pour, si la valeur de paramètre du paramètre d'accès satisfait une condition de valeur de paramètre d'accès prédéfinie d'une station de base sûre, accéder à la première station de base ; et si la valeur de paramètre du paramètre d'accès ne satisfait pas la condition de valeur de paramètre d'accès, continuer d'accéder à une station de base actuelle ; et dans lequel
le module d'accès (330) est configuré pour :
déterminer un facteur de sécurité correspondant à la première station de base selon un degré de correspondance entre la valeur de paramètre du paramètre d'accès et une valeur de référence de paramètre d'accès pré-stockée d'une station de base sûre ; si le facteur de sécurité est inférieur à une valeur de seuil prédéfinie, accéder à la première station de base ; et si le facteur de sécurité n'est pas inférieur à la valeur de seuil prédéfinie, continuer d'accéder à la station de base actuelle ;
dans lequel le module d'accès (330) comprend en outre :
un sous-module d'acquisition (331) configuré pour acquérir une valeur de référence de paramètre d'accès pré-stockée de chacun d'une pluralité de paramètres d'accès de station de base sûre ;
un premier sous-module de détermination (332) configuré pour déterminer un degré de correspondance entre la valeur de paramètre de chaque paramètre d'accès porté dans le message système et une valeur de référence de paramètre d'accès correspondante ;
un deuxième sous-module de détermination (333) configuré pour déterminer une valeur d'ajustement de facteur de sécurité correspondant à chaque paramètre d'accès selon une relation correspondante pré-stockée entre le degré de correspondance et la valeur d'ajustement de facteur de sécurité, et le degré de correspondance entre la valeur de paramètre de chaque paramètre d'accès et la valeur de référence de paramètre d'accès correspondant ; et
un troisième sous-module de détermination (334) configuré pour déterminer une valeur de somme d'une valeur initiale de facteur de sécurité pré-stockée et de la valeur d'ajustement de facteur de sécurité correspondant à chaque paramètre d'accès, de manière à obtenir le facteur de sécurité correspondant à la première station de base ;
dans lequel la pluralité de paramètres d'accès comprend un niveau d'accès minimum, des informations de décalage de resélection, une période de mise à jour, un état de prise en charge du service général de radiocommunication par paquets (GPRS) et une identification de code de zone de localisation (LAC).

4. Appareil selon la revendication 3, dans lequel le module de détermination (310) est configuré pour :
déterminer la première station de base ayant l'intensité de signal maximum à partir d'une intensité de signal d'au moins une station de base actuellement détectée en dehors d'une liste pré-stockée de stations de base interdites, et
l'appareil comprend en outre :
un module d'ajout (340) configuré pour, lorsque la valeur de paramètre du paramètre d'accès ne satisfait pas la condition de valeur de paramètre d'accès, ajouter la première station de base dans la liste des stations de base interdites.

5. Programme informatique, qui lors de son exécution sur un processeur de terminal, met en œuvre un procédé selon l'une quelconque des revendications 1 et 2.
